# EUROPÄISCHE PATENTSCHRIFT

(11) **EP 2 255 067 B1**
(45) Veröffentlichungstag und Bekanntmachung des Hinweises auf die Patenterteilung: **14.12.2011**
(21) Anmeldenummer: 08801083.0
(22) Anmeldetag: 25.07.2008
(51) Int. Cl.: E21B 43/17, F24J 3/08

(54) **GEOTHERMISCHES ZIRKULATIONSSYSTEM**
GEOTHERMAL CIRCULATION SYSTEM
SYSTÈME DE CIRCULATION GÉOTHERMIQUE

(30) Priorität: 15.02.2008 DE 102008009499
(43) Veröffentlichungstag der Anmeldung: 01.12.2010
(73) Patentinhaber: Jung, Reinhard, 30916 Isernhagen (DE); Sperber, Axel, 31234 Edemissen (DE)
(72) Erfinder: Jung, Reinhard, 30916 Isernhagen (DE); Sperber, Axel, 31234 Edemissen (DE)
(74) Vertreter: Hansen, Jochen
(86) Internationale Anmeldenummer: PCT/DE2008/001245
(87) Internationale Veröffentlichungsnummer: WO 2009/100695

(56) Entgegenhaltungen:
- US-A- 3 863 709
- US-A- 4 223 729
- US-A1- 2007 223 999

## Beschreibung

Die Erfindung betrifft ein Verfahren zur Ausbildung eines geothermischen Zirkulationssystems in einem Zieluntergrundbereich bestehend aus wenigstens einer Injektionsbohrung und wenigstens einer Produktionsbohrung, wobei eine hydraulische Verbindung zwischen der Injektionsbohrung und der Produktionsbohrung über ein Risssystem durch Erzeugen einer Vielzahl von Rissen im Zieluntergrundbereich durch schrittweise hydraulische Separierung kurzer Bohrlochabschnitte und hydraulische Risserzeugung vom jeweiligen separierten Bohrlochabschnitt aus im Zieluntergrundbereich erzeugt wird und ein Wärmeträgermedium über Injektionsbohrung, Risssystem und Produktionsbohrung zirkuliert wird, wobei die Injektions- und Produktionsbohrung beim Bohren abgelenkt werden, so dass der Zieluntergrundbereich von den Bohrungen geneigt bis horizontal durchörtert wird.

Ferner betrifft die Erfindung eine Anordnung für ein geothermisches Zirkulationssystem in einem Zieluntergrundbereich bestehend aus wenigstens einer Injektionsbohrung und wenigstens einer Produktionsbohrung, wobei eine hydraulische Verbindung zwischen der Injektionsbohrung und der Produktionsbohrung über ein Risssystem im Zieluntergrundbereich besteht, wobei die Injektionsbohrung und die Produktionsbohrung im Zieluntergrundbereich Bohrlochstrecken aufweisen, die abgelenkt in einem Winkel (α, β) von 0° bis 20° zur Horizontalen angeordnet sind, und eine Vielzahl von Rissen zur hydraulischen Verbindung zwischen Injektionsbohrung und Produktionsbohrung vorgesehen ist.

Die gering permeablen Gesteine des tiefen Untergrundes sind die mit Abstand größte geothermische Ressource, die auch in Ländern wie Deutschland, die arm an konventionell nutzbaren geothermischen Lagerstätten sind, einen substantiellen Beitrag zur Wärme- und Stromversorgung liefern könnte. In internationalen Forschungsprojekten wird seit rund 35 Jahren an Verfahren zu ihrer Erschließung gearbeitet. Beispielsweise wurden in den sog. "Hot Dry Rock"-Forschungsvorhaben Zirkulationssysteme im heißen und trockenen Granit in Tiefen von 2.000 bis 5.000 m erstellt. Dabei wurden in der Tiefe über mehrere hundert Meter lange unverrohrte Bohrlochstrecken Wasser mit sehr hohen Fließraten und -drücken ins Gestein injiziert, um ein Risssystem zu induzieren. Mit diesem Verfahren konnten bisher nur unzureichende Fliessraten und eine entsprechend niedrige thermische Leistung des Zirkulationssystems erreicht werden. Zudem muss befürchtet werden, dass keine ausreichend großen Wärmeaustauschflächen erzeugt werden. Das erzeugte Risssystem dürfte sich im Wesentlichen auf einen Hauptriss beschränken. Den hohen geothermischen Potenzialen in Deutschland stehen somit erhebliche Schwierigkeiten in der Erstellung eines wirtschaftlich nutzbaren Zirkulationssystems gegenüber.

In der US 3,863,709, die als nächstliegender Stand der Technik gilt, ist ein Risssystem mit mehreren parallel zueinander angeordneten Vertikalrissen in einem Zieluntergrund dargestellt. Das Zirkulationssystem wird in zwei verschiedenen Ausgestaltungen beschrieben. Es enthält eine Injektionsbohrung und eine Produktionsbohrung, die beide von der Vertikalen um wenigstens 10 Grad in Richtung einer Azimutalrichtung zur bevorzugt senkrechten Durchschneidung der Risse abgelenkt sind. Ferner wird auch von einer Verrohrung und darin eingebrachten Perforationen gesprochen. In einer alternativen Ausführungsform werden die parallelen Risse jeweils nur alternierend an der Seite der Injektionsbohrung oder an der Seite der Produktionsbohrung hydraulisch angeschlossen. Bei dieser Ausgestaltung soll der Strömungsverlauf durch einen ausreichend permeablen Untergrund von Riss zu Riss laufen.

Eine ähnliche Grundkonstellation beschreibt die US 4,223,729. Der abgelenkte Bohrabschnitt soll bevorzugt im Bereich von 30 Grad bis 45 Grad zur Senkrechten, wiederum im Wesentlichen senkrecht zu sich ausbildenden Rissflächen niedergebracht werden. Zwar sollen die Bohrungen bevorzugt im Bereich der Risserzeugung keine Verrohrung aufweisen, jedoch ist eine Verrohrung nicht ausgeschlossen. Bei der Risserzeugung wird dann sowohl von der Produktionsbohrung wie von der Injektionsbohrung parallel die Risserzeugung von mit Packern abgeschirmten Bohrlochabschnitten durchgeführt. Dabei werden die beiden unter Druck gesetzten Bohrlochabschnitte der Produktionsbohrung und der Injektionsbohrung so ausgewählt, dass sie in einer vermutlichen Rissebene liegen.

Die US 2007/0223999 A1 beschreibt ein Verfahren zur Ausbeutung thermischer Energie aus Gesteinsformationen, bei der insbesondere natürliche Risssysteme im Untergrund durch Aufweitung als Wärmeaustauschflächen genutzt werden.

Ausgehend von der US 3,863,709 ist es daher Aufgabe der Erfindung ein geothermisches Zirkulationssystem anzugeben, das eine möglichst gleichmäßige Verteilung des Wärmeträgermediums auf die erzeugten Risse gewährleistet und damit Strömungskurzschlüsse im Zirkulationssystem vermeidet.

Gelöst wird diese Aufgabe mit einem Verfahren zur Ausbildung eines geothermischen Zirkulationssystems gemäß Anspruch 1 bzw. 2. Ferner wird die Aufgabe vorrichtungsgemäß mit einer Anordnung gemäß Anspruch 9 bzw. 10 gelöst.

Der Ausbildung des Zirkulationssystems mit einer Vielzahl von Rissen liegt die Überlegung zugrunde, dass im Untergrund eine Spannungsanisotropie vorherrscht, womit hydraulisch induzierte Risse sich bevorzugt orthogonal zur geringsten Hauptspannung ausbilden. Im Allgemeinen herrschen hohe mechanische Vertikalspannungen und geringere Horizontalspannungen vor. Ferner besteht in den Horizontalspannungen meist eine ausgeprägte Richtungsanisotropie, womit hydraulisch induzierte Risse bevorzugt vertikal und aufgrund der Anisotropie der horizontalen Spannungen im Wesentlichen in Richtung der maximalen Horizontalspannung ausgerichtet sind. Werden nun die Injektions- und Produktionsbohrung beim Bohren bevorzugt in Richtung der minimalen Horizontalspannung umgelenkt, können vertikale und senkrecht zur Umlenkungsrichtung der Bohrung orientierte Risse ausgehend von der jeweiligen Bohrung erzeugt werden. Diese Risse verschneiden mit der jeweiligen Bohrung je nach Neigung der abgelenkten Bohrlochstrecke über einen relativ kurzen Bohrlochabschnitt. Entsprechend kann bei einer längeren abgelenkten Bohrlochstrecke eine Vielzahl von zueinander im Wesentlichen parallel angeordneten und vertikal orientierten Rissen erzeugt werden.

In seltenen Fällen ist im Untergrund die Vertikalspannung die minimale Hauptspannung, beispielsweise in Gebieten mit ausgeprägter Aufschiebungstektonik. In diesem Fall werden sich hydraulisch induzierte Risse bevorzugt in einer Horizontalebene, nämlich orthogonal zur minimalen Hauptspannung ausrichten. Entsprechend brauchen die Bohrlochstrecken in der Injektionsbohrung und der Produktionsbohrung nicht abgelenkt zu werden. Somit kann direkt aus der vertikalen Bohrlochstrecke die schrittweise Rissinduzierung zur Erzeugung vieler parallel und in diesem Fall im Wesentlichen horizontal angeordneten Risse erfolgen.

Zur Risserzeugung wird bevorzugt ein an einem Rohrgestänge geführter Doppelpacker verwendet, der die hydraulische Separierung eines kurzen Bohrlochabschnittes erlaubt und über den Wasser gezielt in den separierten Bohrlochabschnitt verpresst werden kann. Durch Versetzen des Doppelpackers können somit nacheinander die in Abstand und Anzahl gewünschten Risse erzeugt werden. Somit ist ein Multirisssystem in ingenieurmäßig planbarer Weise im Zieluntergrundbereich realisierbar.

Dadurch, dass vor der hydraulischen Risserzeugung die Injektions- und/oder Produktionsbohrung(en) verrohrt und zementiert werden sowie eine Perforation der Verrohrung an zu jeder hydraulischen Risserzeugung zugeordneten Bohrlochabschnitten erfolgt, wird eine Bohrlochstrecke mit glatter und gleichmäßiger Wandung bereitgestellt, die mit einer Doppelpackeranordnung sicher hydraulisch zu separieren ist. Durch das gezielte Vornehmen von Perforationen durch die Verrohrung und Zementierung werden in genau vorgegebenen Abständen die hydraulischen Verbindungen zum Zieluntergrundbereich erzeugt. Verrohrung bedeutet dabei ein Rohrausbau der Bohrung über die gesamte Bohrung oder über Teilabschnitte der Bohrung, die auch Liner genannt werden.

Wenn die Injektionsbohrung und die Produktionsbohrung so niedergebracht und abgelenkt werden, dass sie im Wesentlichen horizontale Bohrlochstrecken aufweisen, die in einer vorbestimmten Tiefe zueinander antiparallel gebohrt werden, besteht über jeden der Risse im Wesentlichen dieselbe Druckdifferenz zwischen Injektionsbohrung und Produktionsbohrung, so dass die Fliessraten jedes einzelnen Risses miteinander vergleichbar sind. Bei antiparalleler Bohrung werden die aufgrund der von der Leitungslänge abhängenden Strömungsdruckverluste bei im Wesentlichen gleichen hydraulischen Risseigenschaften ausgeglichen, womit sich der Förderstrom des Wärmeträgermediums auf die Risse im Wesentlichen gleich aufteilt. Thermische Kurzschlüsse werden so vermieden. Dabei bedeutet im Wesentlichen horizontal, dass die Bohrlochstrecken eine maximale Neigung von 20° und bevorzugt von 10° zur Horizontalen haben. In bevorzugter Ausgestaltung werden die Injektionsbohrung und die Produktionsbohrung nahe beieinander an einer Bohrlokation niedergebracht und so abgelenkt, dass die Bohrlochstrecken beabstandet aufeinander zu gebohrt werden.

Dadurch, dass in einem Zieluntergrundbereich mit einer Störungszone jeweils von der Injektionsbohrung und der Produktionsbohrung die hydraulische Risserzeugung erfolgt, so dass die erzeugten Risse von der jeweiligen Bohrung bis in die Störungszone reichen und somit eine hydraulische Verbindung zwischen den Rissen der Injektionsbohrung und den Rissen der Produktionsbohrung über die Störungszone erzeugt wird, kann eine im Zieluntergrundbereich befindliche Störungszone mit in die hydraulische Zirkulation integriert werden.

Wenn eine Erstbohrung der Bohrungen, insbesondere die Injektionsbohrung, zuerst gebohrt wird und die hydraulische Risserzeugung aus dieser Erstbohrung erfolgt, können aus der Erstbohrung bereits geologische und geophysikalische Tests zur Untergrunderkundung durchgeführt werden, um dann bei Eignung die gewünschten Risse in der im Zieluntergrundbereich befindlichen Bohrlochstrecke auszuführen.

Wenn nach der Erzeugung der Vielzahl von Rissen diese von einer Zweitbohrung der Bohrungen, insbesondere der Produktionsbohrung, durchörtert werden, kann beim Bohren der Zweitbohrung die tatsächliche Ausbildung der hydraulisch erzeugten Risse, die beispielsweise zuvor durch geophysikalische Messmethoden ermittelt werden, bei der Ausbildung und Ausrichtung der Zweitbohrung berücksichtigt werden. Beim Durchörtem der Risse mit der Zweitbohrung wird meist eine ausreichende hydraulische Verbindung geschaffen, so dass das aus Injektionsbohrung, Risssystem und Produktionsbohrung bestehende geothermische Zirkulationssystem funktionsfähig ist. Über die Injektionsbohrung kann nun das Wärmeträgermedium, meist Wasser, eingepresst und über die Produktionsbohrung entnommen werden. Dabei wird das Wärmeträgermedium mit Fließraten von 10 - 200 l/s, insbesondere 30 -100 l/s zirkuliert. Bei Zirkulationsraten von 100 l/s kann bei einer Gesteinstemperatur von 160 °C ein geothermisches Kraftwerk mit einer Leistung von ca. 4 MWₑₗ betrieben werden. Zudem eignen sich derartige geothermische Zirkulationsssyteme auch und ergänzend für die Wärmeerzeugung und / oder Klimatisierung, beispielsweise für die Wohnraumbeheizung über Femwärmesysteme.

Ergänzend oder als alternative Ausführungsform wird auch die Zweitbohrung verrohrt und zementiert, wonach die Verrohrung an zugeordneten Bohrlochabschnitten perforiert wird und dort eine selektive hydraulische Risserzeugung aus dieser Zweitbohrung erfolgt. Bei dieser Ausgestaltung werden somit auch hydraulische Risse ausgehend von der Zweitbohrung erzeugt, die sich mit den aus der Erstbohrung erzeugten Rissen ausreichend hydraulisch verschneiden, so dass die erforderliche hydraulische Verbindung zur Zirkulation erreicht wird.

Dadurch, dass die Bohrlochstrecken der Injektionsbohrung und der Produktionsbohrung im Zieluntergrundbereich im Wesentlichen parallel oder antiparallel zueinander ausgebildet sind, ist die im Zieluntergrund entlang des jeweiligen Risses zu überbrückende Fliessstrecke im Wesentlichen vergleichbar. Jedoch ergibt sich bei parallel verlaufenden Bohrlochstrecken der Injektionsbohrung und der Produktionsbohrung im Rahmen eines Mehrfach-Risssystems die Problematik, dass aufgrund der von der Leitungslänge abhängenden Strömungsdruckverluste bei gleichen hydraulischen Risseigenschaften diejenigen Risse, die die kürzeste Leitungslänge aufweisen, also am nächsten zur Energiegewinnungseinheit liegen, die höchsten Volumenströme durchleiten. Die weiter entfernt liegenden Risse werden entsprechend weniger stark durchströmt. Es besteht somit die Gefahr, dass ein thermischer Kurzschluss entsteht, womit die thermische Leistung der Anlage insgesamt sinkt. Besonders bevorzugt ist daher die Ausbildung von antiparallel angeordneten horizontalen Bohrlochstrecken, da dabei über jeden der Risse dieselbe Druckdifferenz zwischen Injektionsbohrung und Produktionsbohrung besteht. Entsprechend sind die Fließraten jedes einzelnen Risses miteinander vergleichbar. Ein thermischer Kurzschluss wird vermieden. Alternativ können zum Ausgleich der erheblichen Strömungswiderstände im Bohrloch die geneigten oder horizontalen Bohrlochstrecken sich auch zur Bohrlochsohle hin leicht annähernd angeordnet werden. Damit wird erreicht, dass trotz des in der Bohrlochstrecke entstehenden hydrodynamischen Druckgefälles die Gesamtfließrate gleichmäßiger auf die Einzelrisse verteilt wird und zudem in den weiter von der Bohrlochsohle entfernten Rissen eine größere Wärmeaustauchfläche zur Verfügung steht.

Der Neigungswinkel der abgelenkten Bohrlochstrecken, nachfolgend auch Ablenkstrecken genannt, zur Horizontalen beträgt bevorzugt 0° bis 60°, insbesondere 0° bis 45°, um eine möglichst kurze Verschneidung jedes vertikalen Einzelrisses mit der Bohrlochstrecke zu erreichen. Entsprechend kann bei gleicher Länge der abgelenkten Bohrlochstrecke eine größere Anzahl von Rissen mit einem gegebenen Abstand zueinander erzeugt werden, je weiter die Bohrlochstrecke zur Horizontalen umgelenkt ist. Bei einem Zieluntergrundbereich, der aus einer geologischen Schicht mit relativ geringer Mächtigkeit, beispielsweise nur wenige 100 m, besteht, ist ein geringer Neigungswinkel zur Horizontalen von 0° bis maximal 15° bevorzugt.

Um den Fließwiderstand in den Einzelrissen zu begrenzen und um bei akzeptablen Abständen zwischen den Ablenkstrecken der beiden Bohrungen eine hinreichende Nutzungsdauer zu erzielen, sollten für eine gewünschte Gesamtfliessrate von 10 - 200 l/s, bevorzugt 100 l/s mindestens 6 Risse, bevorzugt 20 bis 50 Risse vorgesehen werden.

Um eine Gesamtnutzungsdauer von wenigstens 20 Jahren für die geothermische Ausbeutung der Lagerstätte sicherzustellen und somit ein ausreichend großes Untergrundsvolumen abkühlen zu können, haben die horizontalen oder geneigten Bohrlochstrecken der Injektions- und Produktionsbohrung(en) eine Länge von 300 m bis 2.000 m, insbesondere 500 m bis 1.200 m und der Abstand der beiden Bohrlochstrecken zueinander beträgt etwa 200 m bis 1.000 m, insbesondere ca. 500 m.

Nachfolgend werden vier Anordnungen anhand der beiliegenden Figuren dargestellt, wobei jedoch nur die Anordnungen gemäß Fig. 4, 5, 6, 8a, b, 9a, b beansprucht werden.

Darin zeigt:
- Fig. 1: in einer schematischen Querschnittsdarstellung ein geothermisches Zirkulationssystem in einer ersten Anordnung,
- Fig. 2: in einer schematischen Querschnittsdarstellung ein geothermisches Zirkulationssystem in einer zweiten Anordnung,
- Fig. 3: die in Fig. 2 in einer Querschnittsskizze dargestellte Anordnung eines Zirkulationssystems in einer Ansicht senkrecht zur Zeichenebene in Fig. 2,
- Fig. 4: eine Detailansicht einer Bohrlochstrecke mit Doppelpacker,
- Fig. 5: die in Fig. 4 gezeigte Situation während oder nach Erzeugung eines Risses,
- Fig. 6: die in Fig. 5 dargestellte Situation mit einem weiteren Riss,
- Fig. 7: eine weitere Anordnung des geothermischen Zirkulations-systems,
- Fig. 8a, b: eine dritte Anordnung des geothermischen Zirkulationssystems und
- Fig. 9a, b: eine Horizontal- und Vertikalprojektion für eine vierte Anordnung des Zirkulationssystems mit zwei antiparallel angeordneten Bohrlochstrecken.

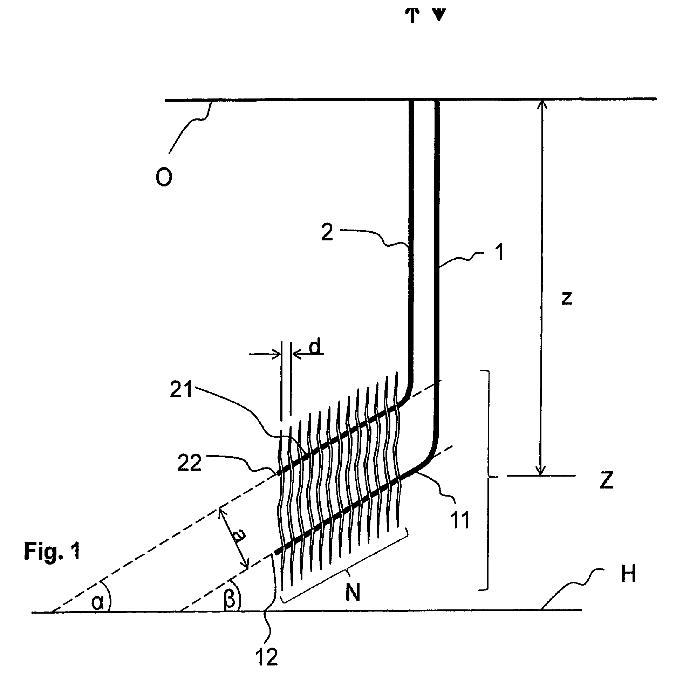

In Fig. 1 ist ein geothermisches Zirkulationssystem in einer ersten Anordnung dargestellt. Das Zirkulationssystem weist eine Injektionsbohrung 1 und eine Produktionsbohrung 2 auf. Die Injektionsbohrung 1 führt von der Erdoberfläche O bis zu einem Zieluntergrundbereich Z, der beispielsweise in einer mittleren Tiefe z von 4.000 bis 5.000 m liegt. Im Zieluntergrundbereich Z ist die Injektionsbohrung 1 abgelenkt und führt in einem Winkel β von beispielsweise 30° zur Horizontalen H entlang einer ersten Bohrlochstrecke 11 bis zur ersten Bohrlochsohle 12 der Injektionsbohrung 1.

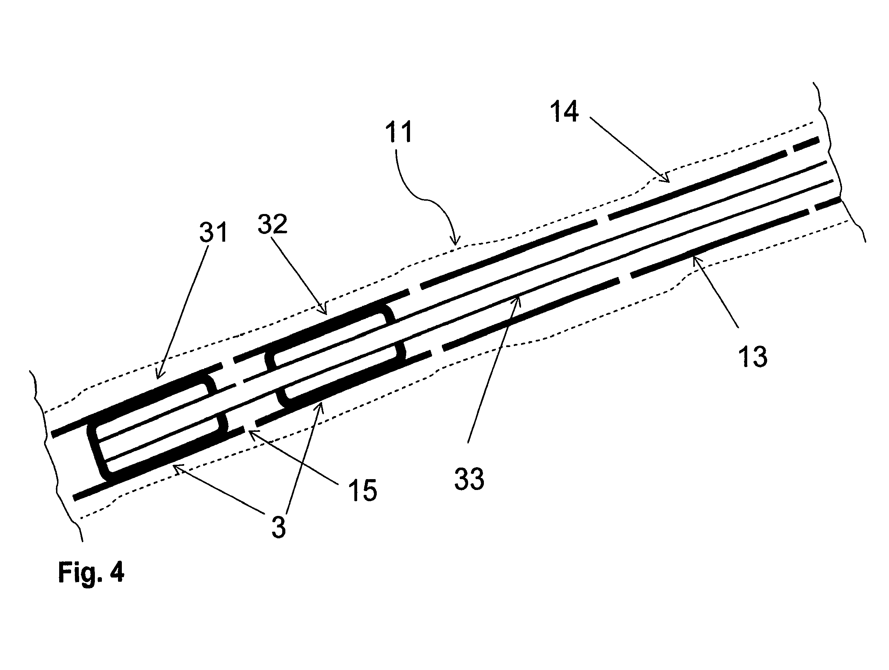

Zumindest die erste Bohrlochstrecke 11 der Injektionsbohrung 1 weist eine Verrohrung 13 auf, die mit einer Zementierung 14 versehen ist, wie in der Detailansicht in Fig. 4 ersichtlich ist. Die Verrohrung 13 weist entlang der ersten Bohrlochstrecke 11 Perforationen 15 in den gewünschten Rissabständen d auf.

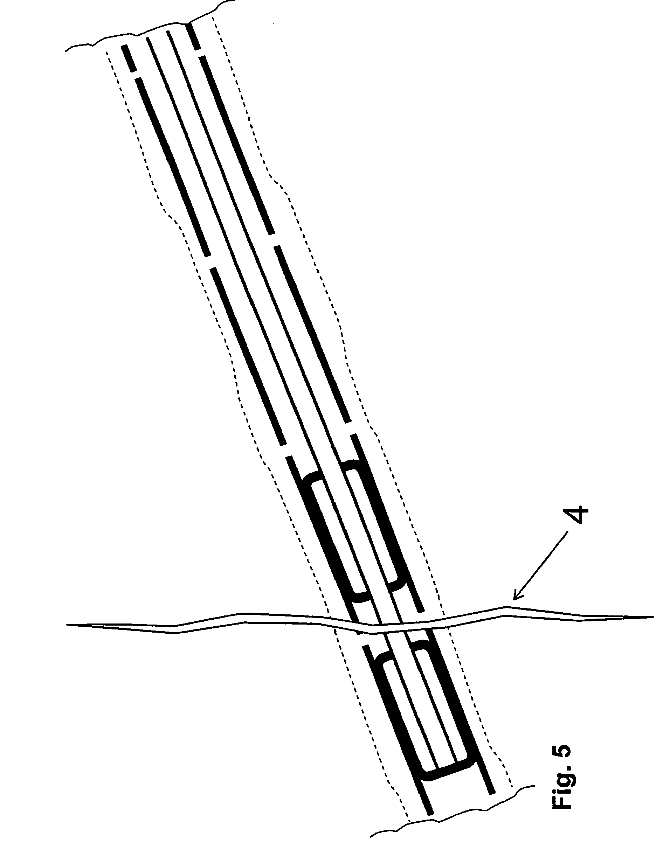

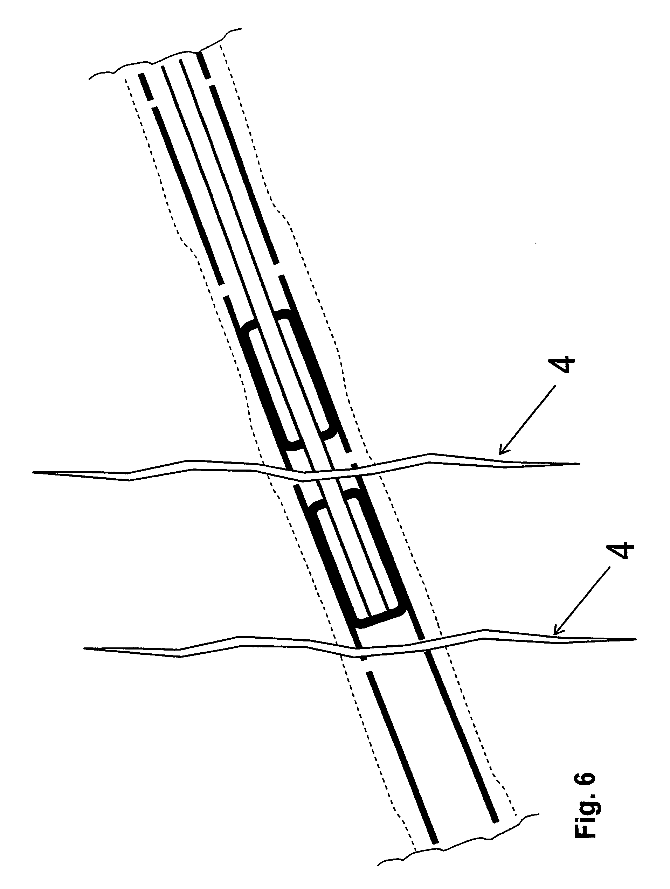

In Fig. 4 ist in der ersten Bohrlochstrecke 11 ein Doppelpacker 3 dargestellt, der aus einem ersten Packer 31 und einem zu diesem beabstandeten zweiten Packer 32 besteht. Der Doppelpacker 3 wird an einem Rohrgestänge 33 von der Erdoberfläche O durch die Injektionsbohrung 1 bis zur gewünschten Position abgeteuft. Dort wird der entsprechende Bohrlochabschnitt durch Aufweiten der beiden Packer 31, 32 hydraulisch separiert. Über das Rohrgestänge 33 wird Wasser unter hohem Druck und ausreichender Fliessrate zur Erzeugung eines Risses in den separierten Bohrlochabschnitt und von diesem durch die Perforation 15 in den Zieluntergrundbereich Z injiziert. Entsprechend bildet sich ein im Wesentlichen vertikaler Riss, dessen Fläche im Wesentlichen orthogonal zur minimalen Horizontalspannung im Zieluntergrundbereich Z ausgerichtet ist. In Fig. 5 ist schematisch ein entsprechender Riss 4 dargestellt. Nach dem Erzeugen des Risses werden die hydraulischen Eigenschaften des Risses durch den Druckabfall bzw. durch Beobachtung der Rücklauffließrate beim Entspannen ermittelt. Nach Druckausgleich und Entspannen der beiden Packer 31, 32 wird der Doppelpacker 3 mit dem Rohrgestänge 33 zur benachbarten Risslokation an der nächsten Perforation 15 in der Verrohrung 13 verschoben und erneut gesetzt. Nach hydraulischer Separierung des entsprechenden Bohrlochabschnitts wird erneut durch Einpumpen von Wasser unter hohem Druck und ausreichender Fliessrate über das Rohrgestänge 33 ein weiterer Riss 4 erzeugt, wie dies in Fig. 6 abgebildet ist.

Nach Erzeugung einer Vielzahl von Rissen, im in Fig. 1 dargestellten Ausführungsbeispiel beispielhaft N = 13, wird die Produktionsbohrung 2 gebohrt. Dabei wird die Produktionsbohrung 2 ebenfalls im Zieluntergrundbereich Z abgelenkt, wobei eine geneigte zweite Bohrlochstrecke 21 entsteht, die die zuvor mit geophysikalischen Messmethoden georteten Risse 4 durchörtert. Im Verschneidungsbereich der Produktionsbohrung 2 mit den Rissen 4 entsteht eine hydraulische Verbindung, so dass das geothermische Zirkulationssystem funktionsfähig ist. Die zweite Bohrlochstrecke 21 der Produktionsbohrung 2 endet nach der Verschneidung mit dem letzten Riss 4 und bildet dort eine zweite Bohlochsohle 22. Die zweite Bohrlochstrecke 21 ist bevorzugt parallel mit einem Abstand a von beispielsweise 500 m zur ersten Bohrlochstrecke 11 der Injektionsbohrung 1 angeordnet. Zur Stützung der Bohrlochstrecke 21 kann diese mit einer geschlitzten Verrohrung bzw. Liner versehen werden.

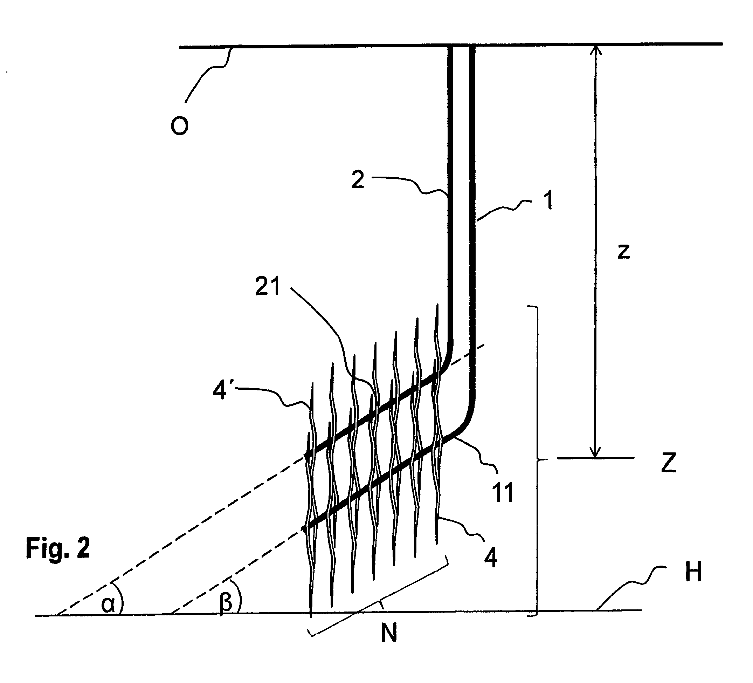

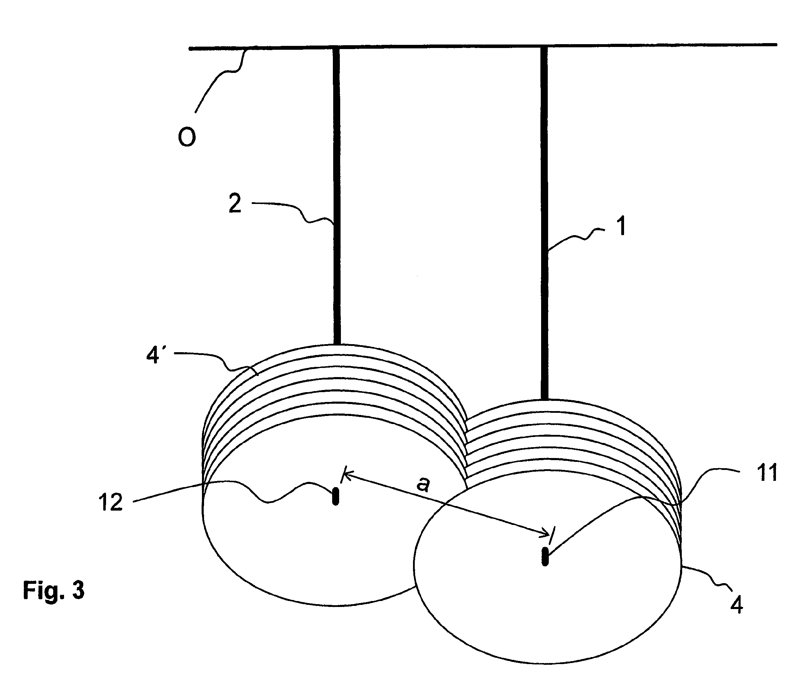

In Fig. 2 ist eine zweite Anordnung des geothermischen Zirkulationssystems im schematischen Querschnitt dargestellt. Funktionsgleiche Bauelemente tragen gleiche Bezugszeichen wie zur Ausführungsform gemäß Fig. 1. Im Unterschied zur Anordnung gemäß Fig. 1 sind in Fig. 2 von beiden Bohrlochstrecken 11 und 21 Risse 4, 4' induziert worden, die sich im Zieluntergrundbereich Z verschneiden. Diese Situation ist in Fig. 3 in einer zur Zeichenebene von Fig 2 vertikalen Ebene in Ansicht zur Fig. 2 von links dargestellt. In der Anordnung gemäß Fig. 2 sind die erste Bohrlochstrecke 11 und die zweite Bohrlochstrecke 21 wiederum im Wesentlichen parallel zueinander in einem Abstand a angeordnet. Die Neigungswinkel a, β zur Horizontalen H betragen ebenfalls ca. 30°.

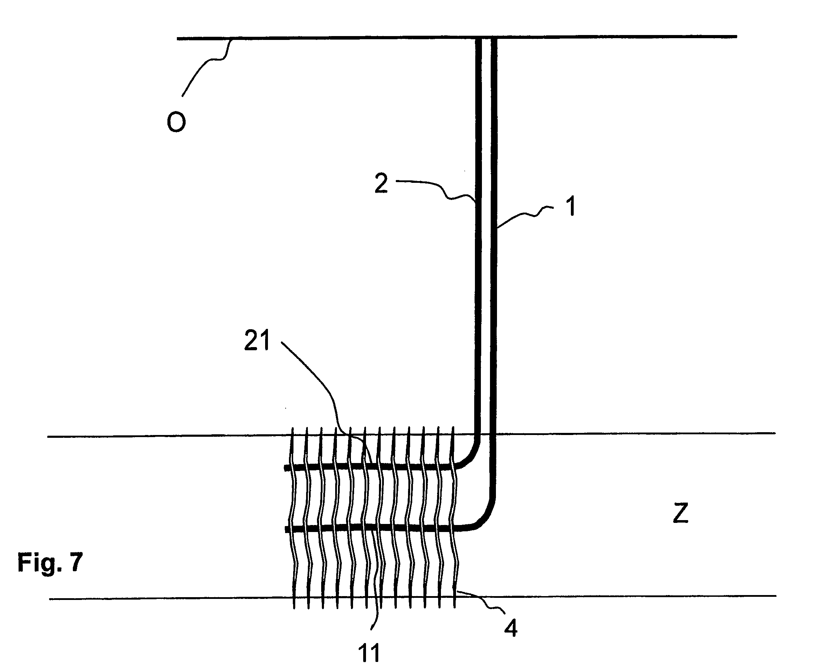

In einer weiteren Anordnung ist in Fig. 7 ein geothermisches Zirkulationssystem dargestellt. Funktionsgleiche Bauelemente tragen gleiche Bezugszeichen wie zur Ausführungsform gemäß Fig. 1 und Fig. 2. In der Anordnung gemäß Fig. 7 werden die Injektions- und Produktionsbohrung 1, 2 so weit abgelenkt, dass die erste und zweite Bohrlochstrecken 11, 21 horizontal innerhalb des Zieluntergrundbereichs Z verlaufen. Diese Ausführung ist bei Zieluntergrundbereichen Z mit relativ geringer Mächtigkeit zu bevorzugen.

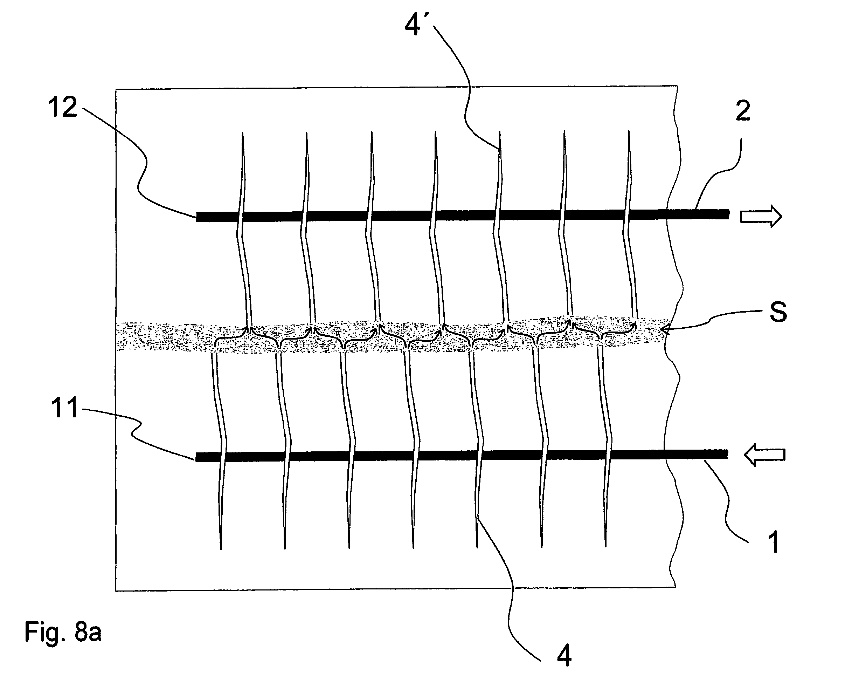

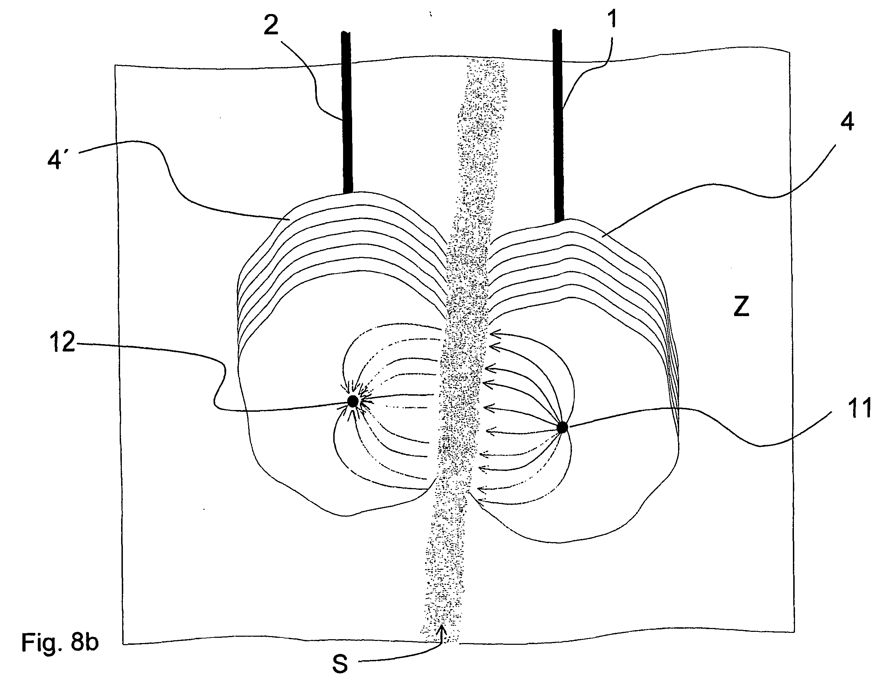

In einer dritten Anordnung ist in Fig. 8 ein geothermisches Zirkulationssystem dargestellt, bei dem im Zieluntergrundbereich Z eine geologische Störungszone S vorliegt. Die Darstellung ähnelt der Darstellung zum ersten Ausführungsbeispiel gemäß Fig. 3 in einer Drahtmodellansicht. Dabei sind funktionsgleiche Bauelemente mit gleichen Bezugszeichen wie zu den vorgenannten Anordnungen bezeichnet. In dieser dritten Anordnung gemäß Fig. 8 sind die Risse 4, ausgehend von der Injektionsbohrung 1 so ausgeführt, dass sie bis in die Störungszone S hineinreichen. Auf der anderen Seite der Störungszone S ist die Produktionsbohrung 2 angeordnet. Von dieser Produktionsbohrung 2 werden ebenfalls Risse 4' erzeugt, die wiederum so ausgerichtet sind, dass sie bis in die Störungszone S reichen. Die hydraulische Verbindung zwischen der Injektionsbohrung 1 und der Produktionsbohrung 2 wird somit über das erste Risssystem 4 bis in die Störungszone S und von der Störungszone S über das Risssystem 4' erreicht. Vorteilhaft bei dieser Ausgestaltung ist, dass die Rissausbreitung jeweils lediglich bis zu der zwischen den Bohrungen befindlichen Störungszone S reichen müssen. Dabei ist es nicht erforderlich, dass sich die beiden Risssysteme 4 und 4' ausgehend von den beiden jeweiligen Bohrungen direkt verschneiden, vielmehr wird die hydraulische Verbindung zwischen den verschiedenen Risssystemen 4 und 4' über die Störungszone S erreicht. Die Störungszone S wirkt somit zusätzlich als Strömungsleiter und somit auch als Wärmeaustauschfläche, so dass die gesamte wirksame Wärmeaustauschfläche für das geothermische Zirkulationssystem über die bereits im Untergrund vorhandene geologische Störungszone S erweitert wird. Der Wirkungsgrad des Zirkulationssystems kann somit durch Nutzung der Störungszone S verbessert werden.

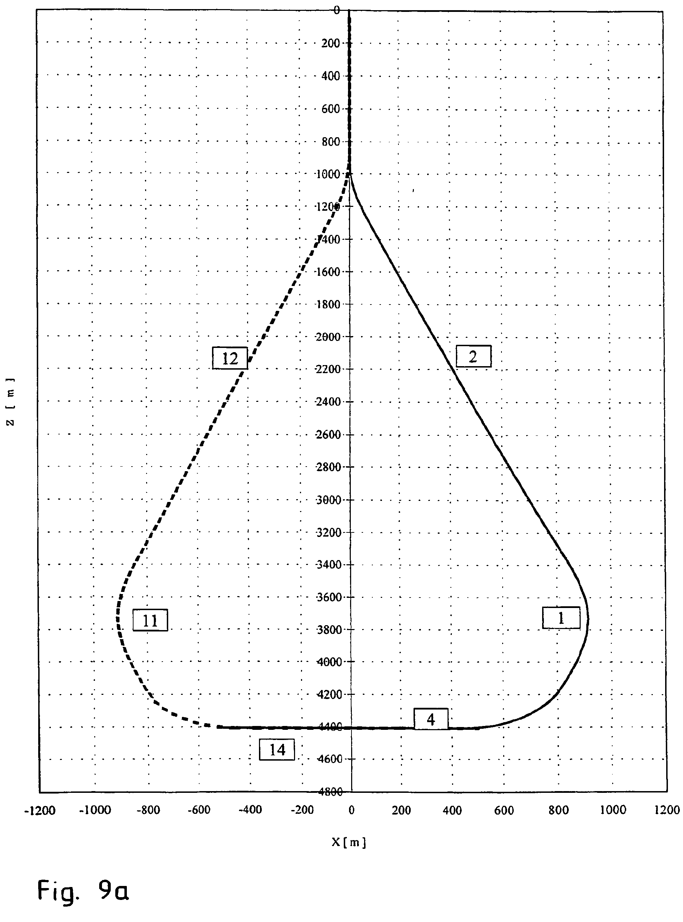

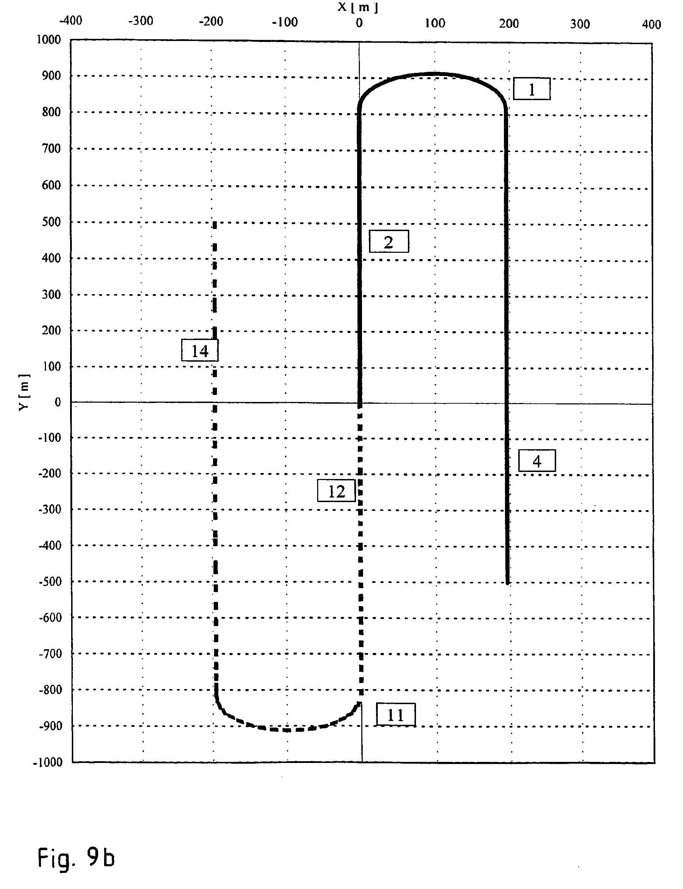

Eine vierte Anordnung ist in den Fig. 9a und 9b dargestellt. Aus der in Fig. 9a dargestellten Vertikalprojektion von zwei Bohrungen ist erkennbar, dass die in durchgezogener Linie dargestellte Injektionsbohrung 1 an der Bohrlokation mit den Koordinaten 0,0 an der Erdoberfläche beginnt. Die Bohrung weist in einer Tiefe von 1000 m eine Ablenkung Richtung Süden auf, so dass die weitere Bohrung geneigt bis zu einer Tiefe von ca. 3500 m weitergeführt ist. Dort wird sie in entgegengesetzter Richtung, also Richtung Norden abgelenkt und geht in einer Tiefe von 4400 m in eine horizontale, erste Bohrlochstrecke 11 mit einer Länge von ca. 1000 m über.

Spiegelbildlich hierzu ist die in Fig. 9a gestrichelt dargestellte Produktionsbohrung 2 ausgeführt. Wie sich aus der Horizontalprojektion der Fig. 9b ergibt, ist neben den Auslenkungen in Süd- bzw. Nordrichtung der beiden Bohrungen auch eine seitliche Ablenkung in Ost- bzw. Westrichtung vorgenommen worden, woraus sich ein Abstand von 400 m der beiden antiparallel angelegten horizontalen Bohrlochstrecken 11, 21 ergibt.

Mit diesen antiparallel angeordneten horizontalen Bohrlochstrecken 11, 21 wird erreicht, dass der Strömungsweg von der Erdoberfläche durch die Injektionsbohrung 1, ihrer horizontalen Bohrlochstrecke 11, einem der zwischen den horizontalen Bohrlochstrecken 11, 21 erzeugten Risse (hier nicht dargestellt) sowie dem entsprechenden Abschnitt in der Produktionsbohrung 2 - unabhängig von dem durchströmten Riss - stets gleiche Länge aufweist, so dass bei jedem Strömungsweg mit etwa dem gleichen Strömungswiderstand zu rechnen ist. Entsprechend verteilt sich das Wärmeträgermedium im Wesentlichen gleichmäßig auf alle zwischen den horizontalen Bohrlochstrecken 11, 21 erzeugten Risse, so dass das gesamte Gesteinsvolumen thermisch gleichmäßig ausgenutzt wird.

Alternativ kann zum Ausgleich der Strömungswiderstände auch eine Anordnung gewählt werden, bei denen die beiden Bohrlochstrecken 11, 21 im Wesentlichen zueinander gleichgerichtet angeordnet sind, wobei beide Bohrungen in Richtung zu ihrer Bohrlochsohle 12, 22 sich leicht annähernd angeordnet sind. Damit kann annähernd der höhere Strömungswiderstand aufgrund der längeren Führung des Wärmeträgermediums in der Bohrung durch einen geringeren Strömungswiderstand im die beiden Bohrungen verbindenden Riss aufgrund des geringeren Abstandes der beiden Bohrungen im Bereich der Bohrlochsohle annähernd ausgeglichen werden. Gleichzeitig wird durch diese Maßnahmen der durchströmte Bereich der sohlenferneren Risse vergrößert und damit einem schnelleren Auskühlen dieser Risse entgegengewirkt.

### Bezugszeichenliste

- 1: Injektionsbohrung
- 11: erste Bohrlochstrecke
- 12: erste Bohrlochsohle
- 13: Verrohrung
- 14: Zementierung
- 15: Perforation
- 2: Produktionsbohrung
- 21: zweite Bohrlochstrecke
- 22: zweite Bohrlochsohle
- 3: Doppelpacker
- 31: erster Packer
- 32: zweiter Packer
- 33: Rohrgestänge
- 4, 4': Riss
- α, β: Winkel
- a: Abstand
- d: Rissabstand
- H: Horizontalebene
- N: Rissanzahl
- O: Erdoberfläche
- Z: Tiefe
- S: Störungszone
- Z: Zieluntergrundbereich

## Patentansprüche

1. Verfahren zur Ausbildung eines geothermischen Zirkulationssystems in einem Zieluntergrundbereich (Z) bestehend aus wenigstens einer Injektionsbohrung (1) und wenigstens einer Produktionsbohrung (2), wobei eine hydraulische Verbindung zwischen der Injektionsbohrung (1) und der Produktionsbohrung (2) über ein Risssystem (4, 4') durch Erzeugen einer Vielzahl von Rissen (4,4') im Zieluntergrundbereich (Z) durch schrittweise hydraulische Separierung kurzer Bohrlochabschnitte und hydraulische Risserzeugung vom jeweiligen separierten Bohrlochabschnitt aus im Zieluntergrundbereich (Z) erzeugt wird und ein Wärmeträgermedium über Injektionsbohrung (1), Risssystem (4, 4') und Produktionsbohrung (2) zirkuliert wird, wobei die Injektions- und Produktionsbohrung (1, 2) beim Bohren abgelenkt werden, so dass der Zieluntergrundbereich (Z) von den Bohrungen geneigt bis horizontal durchörtert wird, **dadurch gekennzeichnet, dass** die Injektionsbohrung (1) und die Produktionsbohrung (2) so niedergebracht und abgelenkt werden, dass sie im Wesentlichen horizontale, zueinander beabstandete Bohrlochstrecken (11, 21) aufweisen, die in einer vorbestimmten Tiefe zueinander antiparallel gebohrt werden.

2. Verfahren zur Ausbildung eines geothermischen Zirkulationssystems in einem Zieluntergrundbereich (Z) bestehend aus wenigstens einer Injektionsbohrung (1) und wenigstens einer Produktionsbohrung (2), wobei eine hydraulische Verbindung zwischen der Injektionsbohrung (1) und der Produktionsbohrung (2) Über ein Risssystem (4, 4') durch Erzeugen einer Vielzahl von Rissen (4, 4') im Zieluntergrundbereich (Z) durch schrittweise hydraulische Separierung kurzer Bohrlochabschnitte und hydraulische Risserzeugung vom jeweiligen separierten Bohrlochabschnitt aus im Zieluntergrundbereich (Z) erzeugt wird und ein Wärmeträgermedium über Injektionsbohrung (1), Risssystem (4, 4') und Produktionsbohrung (2) zirkuliert wird, wobei die Injektions- und Produktionsbohrung (1, 2) beim Bohren abgelenkt werden, so dass der Zieluntergrundbereich (Z) von den Bohrungen geneigt bis horizontal durchörtert wird, **dadurch gekennzeichnet, dass** die Injektionsbohrung (1) und die Produktionsbohrung (2) so niedergebracht und abgelenkt werden, dass sie im Wesentlichen zueinander gleichgerichtete Bohrlochstrecken (11, 21) aufweisen, die in einem spitzen Winkel zueinander angeordnet sind, so dass der Abstand (a) zwischen den Bohrungen zur Bohrsohle (13, 23) abnimmt.

3. Verfahren nach Anspruch 1 oder 2, **dadurch gekennzeichnet, dass** vor der hydraulischen Risserzeugung die Injektions- und/oder Produktionsbohrung(en) (1, 2) verrohrt und zementiert werden sowie eine Perforation (16) der Verrohrung (13) an zu jeder hydraulischen Risserzeugung zugeordneten Bohrlochabschnitten erfolgt.

4. Verfahren nach Anspruch 1,2 oder 3, **dadurch gekennzeichnet, dass** in einem Zieluntergrundbereich (Z) mit einer Störungszone (S) jeweils von der Injektionsbohrung (1) und der Produktionsbohrung (2) die hydraulische Risserzeugung erfolgt, so dass die erzeugten Risse von der jeweiligen Bohrung bis in die Störungszone (S) reichen und somit eine hydraulische Verbindung zwischen der Injektionsbohrung (1) und der Produktionsbohrung (2) über die Störungszone (S) erzeugt wird.

5. Verfahren nach einem der vorangehenden Ansprüchen, **dadurch gekennzeichnet, dass** eine Erstbohrung der Bohrungen, insbesondere die Injektionsbohrung (1), zuerst gebohrt wird und die hydraulische Risserzeugung aus dieser Erstbohrung erfolgt, wobei nach der Erzeugung der Vielzahl von Rissen (4) diese von einer Zweitbohrung der Bohrungen, insbesondere der Produktionsbohrung (2), durchörtert wird.

6. Verfahren nach einem der Ansprüche 1 bis 4, **dadurch gekennzeichnet, dass** eine Erstbohrung der Bohrungen, insbesondere die Injektionsbohrung (1), zuerst gebohrt wird, wobei eine Zweitbohrung der Bohrungen, insbesondere die Produktionsbohrung (2) so abgeteuft wird, dass durch die Erzeugung einer Vielzahl von Rissen (4, 4') in den beiden Bohrungen, ein sich verschneidendes Risssystem und damit eine hydraulische Verbindung zwischen den beiden Bohrungen entsteht.

7. Verfahren nach Anspruch 5 oder 6, **dadurch gekennzeichnet, dass** die Zweitbohrung verrohrt und zementiert wird, wonach die Verrohrung (13) an zugeordneten Bohrlochabschnitten perforiert wird und dort eine selektive hydraulische Risserzeugung aus dieser Zweitbohrung erfolgt.

8. Verfahren nach einem der vorangehenden Ansprüche, **dadurch gekennzeichnet, dass** die Risserzeugung mit einem an einem Rohrgestänge geführten Doppelpacker innerhalb der perforierten Verrohrung (13) durchgeführt wird.

9. Anordnung für ein geothermisches Zirkulationssystem in einem Zieluntergrundbereich (Z) bestehend aus wenigstens einer Injektionsbohrung (1) und wenigstens einer Produktionsbohrung (2), wobei eine hydraulische Verbindung zwischen der Injektionsbohrung (1) und der Produktionsbohrung (2) über ein Risssystem (4,4') im Zieluntergrundbereich (Z) besteht, wobei
- die Injektionsbohrung (1) und die Produktionsbohrung (2) im Zieluntergrundbereich (Z) Bohrlochstrecken (11, 21) aufweisen, die abgelenkt in einem Winkel (α, β) von 0° bis 20° zur Horizontalen (H) angeordnet sind, und
- eine Vielzahl von Rissen (4, 4') zur hydraulischen Verbindung zwischen Injektionsbohrung (1) und Produktionsbohrung (2) vorgesehen ist,
**dadurch gekennzeichnet, dass** die Bohrlochstrecken (11, 21) der Injektionsbohrung (1) und der Produktionsbohrung (2) im Zieluntergrundbereich (Z) im Wesentlichen antiparallel zueinander angeordnet sind.

10. Anordnung für ein geothermisches Zirkulationssystem in einem Zieluntergrundbereich (Z) bestehend aus wenigstens einer Injektionsbohrung (1) und wenigstens einer Produktionsbohrung (2), wobei eine hydraulische Verbindung zwischen der Injektionsbohrung (1) und der Produktionsbohrung (2) über ein Risssystem (4,4') im Zieluntergrundbereich (2) besteht, wobei
- die Injektionsbohrung (1) und die Produktionsbohrung (2) im Zieluntergrundbereich (Z) Bohrlochstrecken (11, 21) aufweisen, die abgelenkt in einem Winkel (α, β) von 0° bis 20° zur Horizontalen (H) angeordnet sind, und
- eine Vielzahl von Rissen (4, 4') zur hydraulischen Verbindung zwischen Injektionsbohrung (1) und Produktionsbohrung (2) vorgesehen ist.
**dadurch gekennzeichnet, dass** die Bohrlochstrecken (11, 21) der Injektionsbohrung (1) und der Produktionsbohrung (2) im Zieluntergrundbereich (Z) in einem spitzen Winkel zueinander gleichgerichtet angeordnet sind, so dass der Abstand (a) zwischen den Bohrungen zur Bohrsohle (13, 23) abnimmt.

11. Anordnung nach Anspruch 9 oder 10, **dadurch gekennzeichnet, dass** mindestens 6 Risse (4, 4'), bevorzugt 20 bis 50 Risse vorgesehen sind.

12. Anordnung nach einem der vorangehenden Ansprüche 9, 10 oder 11, **dadurch gekennzeichnet, dass** die Injektionsbohrung (1) eine Verrohrung (13) und Zementierung (14) aufweist, wobei an den gewünschten Risslokationen Perforationen (15) in der Verrohrung (13) vorgesehen sind.

13. Anordnung nach einem der Ansprüche 9 bis 12, **dadurch gekennzeichnet, dass** die Produktionsbohrung (2) eine Verrohrung und Zementierung aufweist, wobei an den gewünschten Risslokationen Perforationen in der Verrohrung vorgesehen sind.

## Claims

1. A method of forming a geothermal circulation system in a target subsurface region (Z), consisting of at least one injection bore (1) and at least one production bore (2), wherein an hydraulic connection between the injection bore (1) and the production bore (2) via a fissure system (4, 4') is produced in the target subsurface region (Z) through the production of a plurality of fissures (4, 4') in the target subsurface region (Z) through stepwise hydraulic separation of short borehole portions and hydraulic fissure production issuing from the respective separated borehole portion and a heat carrier medium is circulated via the injection bore (1), the fissure system (4, 4') and the production bore (2), wherein the injection and production bore (1, 2) are diverted upon boring, so that the target subsurface region (Z) is intersected, angularly to horizontally, by the bores, **characterised in that** the injection bore (1) and the production bore (2) are drilled and diverted in such a manner that they have substantially horizontal borehole stretches (11, 21) at a distance from one another, which are bored antiparallel to one another and at a predetermined depth,

2. A method of forming a geothermal circulation system in a target subsurface region (Z), consisting of at least one injection bore (1) and at least one production bore (Z), wherein an hydraulic connection between the injection bore (1) and the production bore (2) via a fissure system (4, 4') is produced in the target subsurface region (Z) through the production of a plurality of fissures (4, 4') in the target subsurface region (Z) through stepwise hydraulic separation of short borehole portions and hydraulic fissure production issuing from the respective separated borehole portion and a heat carrier medium is circulated via the injection bore (1), the fissure system (4, 4') and the production bore (2), wherein the injection and production bore (1, 2) are diverted upon boring, so that the target subsurface region (Z) is intersected, angularly to horizontally, by the bores, **characterised in that** the injection bore (1) and the production bore (2) are drilled and diverted in such a manner that they have substantially mutually equidirectional borehole stretches (11, 21) which are arranged at an acute angle to one another, so that the distance (a) between the boreholes decreases towards the bore bottom (13, 23).

3. A method according to claim 1 or 2, **characterised in that** before the hydraulic fissure production, the injection and/or production bore(s) (1, 2) is/are tubed and cemented and a perforation (15) of the tubing (13) takes place at borehole portions associated with each hydraulic fissure production.

4. A method according to claim 1, 2 or 3, **characterised in that** in a target subsurface region (Z) with a fault zone (S), the hydraulic fissure production takes place in each case from the injection bore (1) and the production bore (2), so that the produced fissures extend from the respective bore right into the fault zone (S) and consequently an hydraulic connection is produced between the injection bore (1) and the production bore (2) via the fault zone (S).

5. A method according to any one of the preceding claims, **characterised in that** a first bore of the bores, in particular the injection bore (1), is bored first of all and the hydraulic fissure production takes place from this first bore, wherein after the production of the plurality of fissures (4), the plurality of fissures are intersected by a second bore of the bores, in particular the production bore (2).

6. A method according to any one of claims 1 to 4, **characterised in that** a first bore of the bores, in particular the injection bore (1), is bored first of all, wherein a second bore of the bores, in particular the production bore (2), is sunk in such a manner that through the production of a plurality of fissures (4, 4') in the two boreholes there arises an intersecting fissure system and thereby an hydraulic connection between the two bores.

7. A method according to claim 5 or 6, **characterised in that** the second bore is tubed and cemented, whereupon the tubing (13) is perforated at associated borehole portions and a selective hydraulic fissure production from this second bore takes place there.

8. A method according to any one of the preceding claims, **characterised in that** the fissure production is carried out by means of a double packer, guided on a drill pipe, within the perforated tubing (13).

9. An arrangement for a geothermal circulation system in a target subsurface region (2), consisting of at least one injection bore (1) and at least one production bore (2), wherein in the target subsurface region (Z) there is an hydraulic connection between the injection bore (1) and the production bore (2) via a fissure system (4, 4'), wherein
- in the target subsurface region (Z), the injection bore (1) and the production bore (2) have borehole stretches (11, 21) arranged diverted at an angle (α, β) from 0° to 20° to the horizontal (H), and
- a plurality of fissures (4, 4') for the hydraulic connection between the injection bore (1) and the production bore (2) are provided, **characterised in that** in the target subsurface region (Z), the borehole stretches (11, 21) of the injection bore (1) and the production bore (2) are arranged substantially antiparallel in relation to one another.

10. An arrangement for a geothermal circulation system in a target subsurface region (Z), consisting of at least one injection bore (1) and at least one production bore (2), wherein in the target subsurface region (Z), there is an hydraulic connection between the injection bore (1) and the production bore (2) via a fissure system (4, 4'), wherein
- in the target subsurface region (2), the injection bore (1) and the production bore (2) have borehole stretches (11, 21) arranged diverted at an angle (α, β) from 0° to 20° to the horizontal (H), and
- a plurality of fissures (4, 4') are provided for the hydraulic connection between the injection bore (1) and the production bore (2), **characterised in that** in the target subsurface region (Z), the borehole stretches (11, 21) of the injection bore (1) and the production bore (2) are arranged equidirectional at an acute angle to one another, so that the distance (a) between the bores decreases towards the bore bottom (13, 23).

11. An arrangement according to claim 9 or 10, **characterised in that** at least 6 fissures (4, 4'), preferably 20 to 50 fissures, are provided.

12. An arrangement according to any one of the preceding claims 9, 10 or 11, **characterised in that** the injection bore (1) has tubing (13) and cementing (14), wherein perforations (15) are provided in the tubing (13) at the desired fissure locations.

13. An arrangement according to any one of claims 9 to 12, **characterised in that** the production bore (2) has tubing and cementing, wherein perforations are provided in the tubing at the desired fissure locations.

## Revendications

1. Procédé pour la réalisation d'un système de circulation géothermique dans une zone cible du sous-sol (Z), constitué d'au moins un trou de forage d'injection (1) et d'au moins un trou de forage de production (2), une liaison hydraulique étant réalisée entre le trou de forage d'injection (1) et le trou de forage de production (2) par l'intermédiaire d'un système de fissures (4, 4') en formant une pluralité de fissures (4, 4') dans la zone cible du sous-sol (Z) au moyen d'une séparation hydraulique progressive de courts tronçons de trous de forage et de la formation de fissures hydrauliques à partir du tronçon de trou de forage séparé respectif dans la zone cible du sous-sol (Z), et un fluide caloporteur étant mis en circulation via le trou de forage d'injection (1), le système de fissures (4, 4') et le trou de forage de production (2), le trou de forage d'injection et le trou de forage de production (1, 2) étant déviés pendant le forage, de telle sorte que la zone cible du sous-sol (Z) est percée par les trous de forage inclinés jusqu'à l'horizontale, **caractérisé en ce que** le trou de forage d'injection (1) et le trou de forage de production (2) sont forés et déviés de telle sorte qu'ils comportent des tronçons de trous de forage (11, 21) sensiblement horizontaux écartés l'un de l'autre, lesquels sont forés sur une profondeur prédéterminée anti-parallèlement l'un à l'autre.

2. Procédé pour la réalisation d'un système de circulation géothermique dans une zone cible du sous-sol (Z), constituée d'au moins un trou de forage d'injection (1) et d'au moins un trou de forage de production (2), une liaison hydraulique étant réalisée entre le trou de forage d'injection (1) et le trou de forage de production (2) par l'intermédiaire d'un système de fissures (4, 4') en formant une pluralité de fissures (4, 4') dans la zone cible du sous-sol (Z) au moyen d'une séparation hydraulique progressive de courts tronçons des trous de forage et la formation de fissures hydrauliques à partir du tronçon de trou de forage séparé respectif dans la zone cible du sous-sol (Z), et un fluide caloporteur étant mis en circulation via le trou de forage d'injection (1), le système de fissures (4, 4') et le trou de forage de production (2), le trou de forage d'injection et le trou de forage de production (1, 2) étant déviés pendant le forage, de telle sorte que la zone cible du sous-sol (Z) est percée par les trous de forage inclinés jusqu'à l'horizontale, **caractérisé en ce que** le trou de forage d'injection (1) et le trou de forage de production (2) sont forés et déviés de telle sorte qu'ils comportent des tronçons de trous de forage (11, 21) de direction sensiblement identique, lesquels sont disposés en formant un angle aigu entre eux, de telle sorte que la distance (a) entre les trous de forage diminue vers le fond (13, 23) des trous de forage.

3. Procédé selon la revendication 1 ou 2, **caractérisé en ce que**, avant la formation des fissures hydrauliques, les trous de forage d'injection et/ou de production (1, 2) sont tubés et cimentés, et une perforation (15) du tubage (13) est effectuée au niveau des tronçons des trous de forage associés à la formation des fissures hydrauliques.

4. Procédé selon la revendication 1, 2 ou 3, **caractérisé en ce que** dans une zone cible du sous-sol (Z) présentant une zone failleuse (S), les fissures hydrauliques sont générées respectivement à partir du trou de forage d'injection (1) et du trou de forage de production (2), de telle sorte que les fissures générées s'étendent depuis le trou de forage correspondant jusque dans la zone failleuse (S) et, de ce fait, qu'une liaison hydraulique est établie entre le trou de forage d'injection (1) et le trou de forage de production (2) via la zone failleuse (S).

5. Procédé selon l'une quelconque des revendications précédentes, **caractérisé en ce qu'**un premier trou de forage des trous de forage, en particulier le trou de forage d'injection (1), est percé en premier, et la formation des fissures hydrauliques est effectuée à partir de ce premier trou de forage, les fissures (4) étant traversées par un deuxième trou de forage, en particulier le trou de forage de production (2), après la formation de la pluralité de fissures (4).

6. Procédé selon l'une des revendications 1 à 4, **caractérisé en ce qu'**un premier trou de forage des trous de forage, en particulier le trou de forage d'injection (1), est percé en premier, un deuxième trou de forage des trous de forage, en particulier le trou de forage de production (2), étant creusé de telle sorte que, sous l'effet de la formation d'une pluralité de fissures (4, 4') dans les deux trous de forage, il se forme un système de fissures s'entrecroisant et ainsi une liaison hydraulique entre les deux trous de forage.

7. Procédé selon la revendication 5 ou 6, **caractérisé en ce que** le deuxième trou de forage est tubé et cimenté, à la suite de quoi le tubage (13) est perforé sur des tronçons du trou de forage associés et il s'y produit une formation sélective de fissures hydrauliques partant de ce deuxième trou de forage.

8. Procédé selon l'une des revendications précédentes, **caractérisé en ce que** la formation des fissures est effectuée à l'intérieur du tubage (13) perforé avec une garniture d'étanchéité double guidée sur un train de tiges.

9. Agencement pour un système de circulation géothermique dans une zone cible du sous-sol (Z), constitué d'au moins un trou de forage d'injection (1) et d'au moins un trou de forage de production (2), une liaison hydraulique étant réalisée entre le trou de forage d'injection (1) et le trou de forage de production (2) par l'intermédiaire d'un système de fissures (4, 4') dans la zone cible du sous-sol (Z), dans lequel
- le trou de forage d'injection (1) et le trou de forage de production (2) présentent, dans la zone cible du sous-sol (Z), des tronçon de trou de forage (11, 21) qui sont déviés selon un angle (α, β) de 0° à 20° par rapport à l'horizontale (H), et
- une pluralité de fissures (4, 4') est prévue pour la liaison hydraulique entre le trou de forage d'injection (1) et le trou de forage de production (2),
**caractérisé en ce que** les tronçons de trou de forage (11, 21) du trou de forage d'injection (1) et du trou de forage de production (2), dans la zone cible du sous-sol (Z), sont disposés sensiblement anti-parallèlement l'un à l'autre.

10. Agencement pour un système de circulation géothermique dans une zone cible du sous-sol (Z), constitué d'au moins un trou de forage d'injection (1) et d'au moins un trou de forage de production (2), une liaison hydraulique étant réalisée entre le trou de forage d'injection (1) et le trou de forage de production (2) par l'intermédiaire d'un système de fissures (4, 4') dans la zone cible du sous-sol (Z), dans lequel
- le trou de forage d'injection (1) et le trou de forage de production (2) présentent, dans la zone cible du sous-sol (Z), des tronçons de trou de forage (11, 21) qui sont déviés selon un angle (α, β) de 0° à 20° par rapport à l'horizontale (H), et
- une pluralité de fissures (4, 4') est prévue pour la liaison hydraulique entre le trou de forage d'injection (1) et le trou de forage de production (2),
**caractérisé en ce que** les tronçons de trou de forage (11, 21) du trou de forage d'injection (1) et du trou de forage de production (2), dans la zone cible du sous-sol (Z), sont de direction sensiblement identique et disposés en formant un angle aigu entre eux, de telle sorte que la distance (a) entre les trous de forage diminue vers le fond (13, 23) des trous de forage.

11. Agencement selon la revendication 9 ou 10, **caractérisé en ce qu'**il est prévu au moins 6 fissures (4, 4'), de préférence 20 à 50 fissures.

12. Agencement selon la revendication 9, 10 ou 11, **caractérisé en ce que** le trou de forage d'injection (1) comporte un tubage (13) et une cimentation (14), des perforations (15) étant prévues dans le tubage (13) aux emplacements souhaités des fissures.

13. Agencement selon l'une des revendications 9 à 12, **caractérisé en ce que** le trou de forage de production (2) comporte un tubage et une cimentation, des perforations étant prévues dans le tubage aux emplacements souhaités des fissures.
